**Europäisches Patentamt**

**European Patent Office**

**Office européen des brevets**

(19)

(11) Veröffentlichungsnummer: **0 269 856
B1**

(12)

# EUROPÄISCHE PATENTSCHRIFT

(45) Veröffentlichungstag der Patentschrift:
04.07.90

(51) Int. Cl.⁵: **B62D 1/18**

(21) Anmeldenummer: **87115793.9**

(22) Anmeldetag: **28.10.87**

(54) **Höhenverstellbare Lenksäule für Kraftfahrzeuge.**

(30) Priorität: **08.11.86  DE 3638163**

(43) Veröffentlichungstag der Anmeldung:
**08.06.88 Patentblatt 88/23**

(45) Bekanntmachung des Hinweises auf die Patenterteilung:
**04.07.90 Patentblatt 90/27**

(84) Benannte Vertragsstaaten:
**ES FR GB IT SE**

(56) Entgegenhaltungen:
**DE-A- 3 318 935
DE-A- 3 423 161
US-A- 2 769 351
US-A- 2 836 988**

(73) Patentinhaber: **Lemförder Metallwaren AG,
Postfach 1220, D-2844 Lemförde(DE)**

(72) Erfinder: **Nolte, Frank, Dipl.-Ing., Wittenberger
Strasse 24, D-4500 Osnabrück(DE)**

(74) Vertreter: **Bruse, Willy Hans Heinrich, Edisonstrasse 14,
D-2800 Bremen 33(DE)**

ACTORUM AG

## Beschreibung

Die Erfindung betrifft eine höhenverstellbare Lenksäule für Kraftfahrzeuge der Gattung nach dem Oberbegriff des Patentanspruches 1.

Eine Lenksäule mit diesen Merkmalen ist aus der US-A 2 836 988 bekannt. Die Gewindemutter ist bei dieser bekannten Ausführung in dem Gehäuse drehbar gelagert und durch sich radial erstreckende, in innere Ausnehmungen des Gehäuses eingreifende Flansche gegen axiale Verschiebung gesichert. Sie greift mit ihrem Gewinde in ein Außengewinde am Umfang einer Hülse ein, die das Mantelrohr bildet. Mittel zur Ausschaltung eines Axialspiels sind nicht vorgesehen.

Aus der DE-C 3 318 935 ist eine Anordnung bekannt, bei der das Koppelglied für die Übertragung der motorischen Antriebskräfte auf das Mantelrohr aus einer auf dem Umfang des axial in dem Gehäuse verfahrbaren Mantelrohres angeordneten Zahnstange besteht, in die eine dazu achsparallel angeordnete Getriebeschnecke eingreift, für deren Durchgriff in dem Gehäuse eine Aussparung vorgesehen ist. Sowohl die Getriebeschnecke als auch der Antriebsmotor sind außen am Gehäuse gelagert bzw. befestigt. Je nach eingeschalteter Drehrichtung des Antriebsmotors ist die Lenksäule somit teleskopartig einfahrbar oder ausfahrbar, wobei die innen gelagerte Lenkspindel diesen Bewegungen folgt, weil sie ebenfalls teleskopierbare Teile aufweist, von denen eines axial unverschieblich in dem Mantelrohr und eines axial unverschieblich karosserieseitig drehbar gelagert ist.

Aufgabe der Erfindung ist die Gestaltung eines motorischen Antriebes für eine axial spielfreie Höhenverstellung der Lenksäule mit möglichst geringem baulichen Aufwand und möglichst geringer Masse der verstellbaren Teile.

Die Erfindung löst diese Aufgabe durch Ausbildungsmerkmale nach dem Kennzeichen des Patentanspruches 1.

Erreicht wird dadurch eine leichtgängige, axial spielfreie Ausbildung des motorischen Verstellantriebes für die Höheneinstellung. Die Ausbildung entspricht den modernen Sicherheitsanforderungen und den Komfortansprüchen der Benutzer von mit höhenverstellbaren Lenksäulen ausgestatteten Kraftfahrzeugen.

Es werden im wesentlichen rotationssymmetrische Drehteile verwendet. Die Lenksäule ist mit geringem Aufwand herstellbar und auch leicht montierbar. Alle Teile mit nennenswerter Masse sind karosserieseitig befestigt, wobei die verstellbaren Teile mit geringer Masse ausführbar sind, wie es zum Schutze der Fahrzeuginsassen bei Fahrzeugzusammenstößen angestrebt wird. Die Verstellkräfte des Antriebsmotors wirken weitestgehend symmetrisch zur Mittellängsachse der Lenksäule auf deren Teile, wodurch eine sehr reibungsarme Verstellbewegung erreicht wird, die nicht nur komfortabel wirksam ist, sondern auch eine weitere Reduzierung der Masse der verwendeten Bauteile ermöglicht.

Damit sich bei der Verstellung des Mantelrohres in axialer Richtung möglichst wenig Massen der für die Verstellung vorgesehenen Bauteile bewegen, ist zwischen der Gewindemutter und dem Mantelrohr ein Gewinde hoher Steigung vorgesehen, so daß bereits geringe Drehbewegungen der Gewindemutter zu der gewünschten Axialverstellung des Mantelrohres führen. Die hohe Steigung des Gewindes zwischen der Gewindemutter und dem Mantelrohr ist in Verbindung mit der Getriebeübersetzung zwischen dem Antriebsmotor und der Gewindemutter zu sehen, welches die Motordrehzahl auf eine langsame Bewegung der Gewindemutter reduziert. Die hohe Gewindesteigung und die Anwendung eines Rechteckgewindes führen aber vor allem zu geringen Reibungsverlusten zwischen der Mutter und dem Gewinde auf dem Mantelrohr.

Auf der Zeichnung ist ein Ausführungsbeispiel der Erfindung dargestellt. Es zeigen:

Figur 1 einen Längsschnitt durch eine Lenksäule in einer Achsebene und

Figur 2 eine dazu um 90 Grad versetzte Ansicht mit teilweisem Schnitt des unteren Zeichnungsteils.

Das Ausführungsbeispiel zeigt eine höhenverstellbare Lenksäule, deren Kopfteil mit dem in der Zeichnung nicht dargestellten Lenkrad gleichzeitig in der Neigung einstellbar ist.

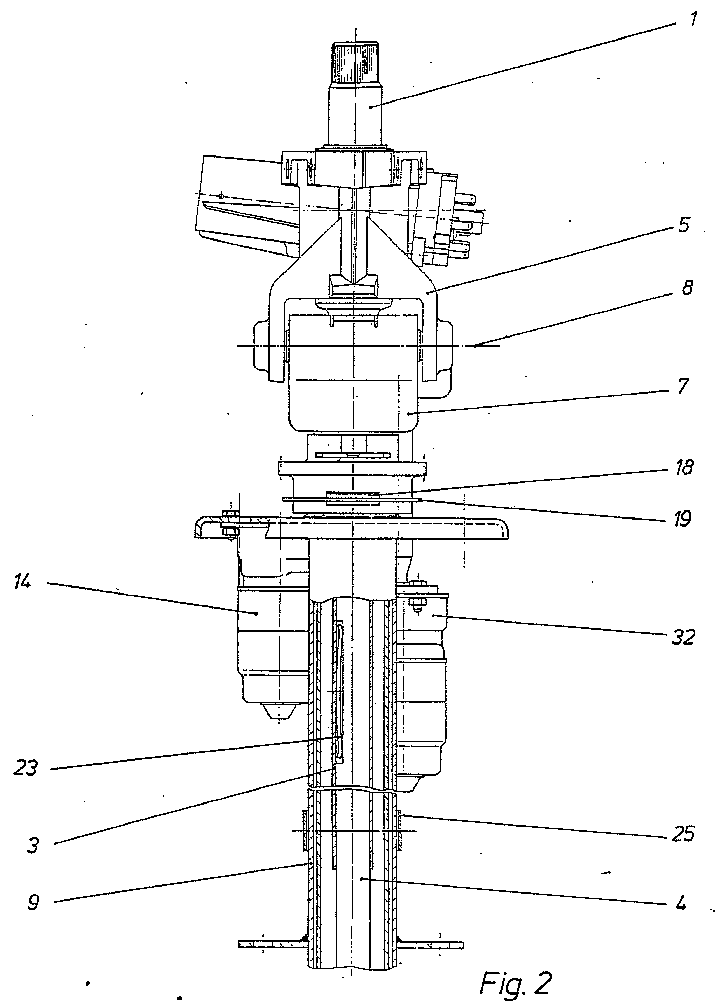

Die mehrteilige Lenkspindel der Lenksäule besteht aus dem am freien oberen Ende mit dem Lenkrad verbindbaren oberen Teil 1 und dem mit diesem durch ein Kreuzgelenk 2 verbundenen unteren Teil 3, welches seinerseits teleskopartig axial verschiebbar auf einem weiteren Teil 4 angeordnet ist. Dieses ist gegenüber der Karosserie axial unverschiebbar, jedoch drehbar, gelagert. Das obere Teil der Lenkspindel 1 ist drehbar in einem oberen Gehäuseteil 5 gelagert, während der axial verstellbare Teil 3 der Lenkspindel in einem axial verschiebbaren Mantelrohr 6 drehbar, in diesem jedoch nicht gelagert ist und zusammen mit diesem Mantelrohr 6 axial verstellt werden kann. Eine glockenförmige Erweiterung 7 am oberen Ende des Mantelrohres 6 und das Gehäuse 5 sind durch ein Kippgelenk miteinander verbunden, dessen Kippachse 8 mit dem Mittelpunkt des Kreuzgelenkes 2 zusammenfällt (Figur 2).

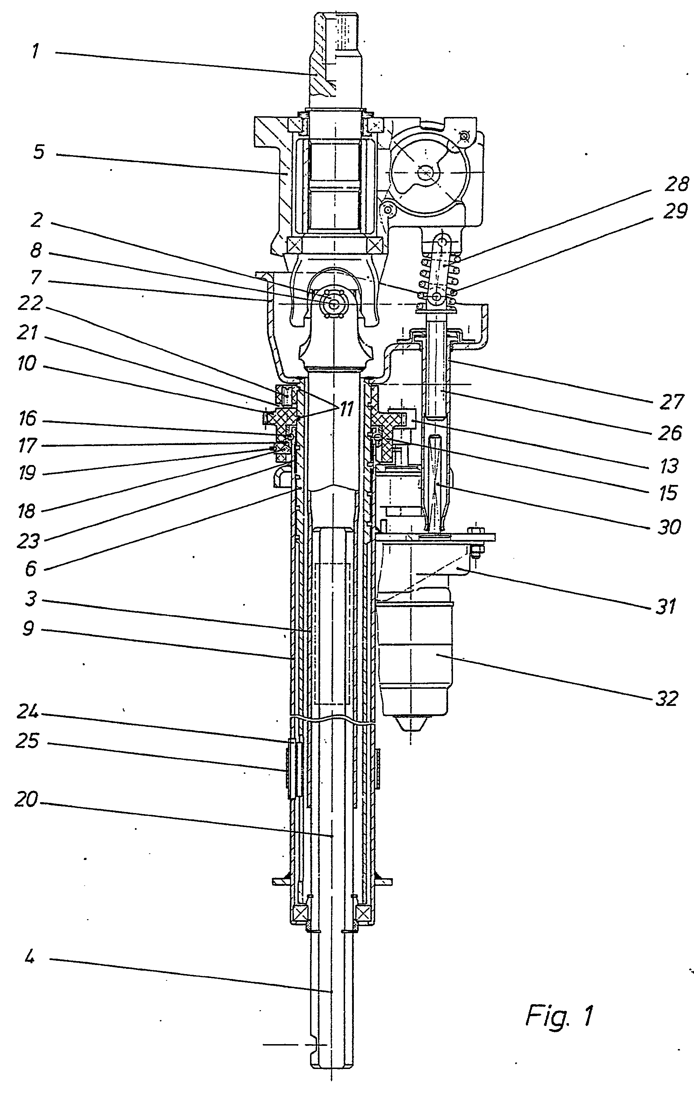

Das Mantelrohr 6 ist innerhalb eines rohrförmigen Gehäuses nicht drehbar aber axial verstellbar angeordnet, so daß es zusammen mit dem unteren Teil 3 der Lenkspindel, dem oberen Teil 1 der Lenkspindel und dem Gehäuseteil 5 gegenüber dem karosserieseitig festen Gehäuse ein- und ausfahrbar ist. Für diese Höhenverstellung der Lenksäule ist auf dem aus dem Gehäuse herausgeführten oberen Ende des Mantelrohres 6 eine Gewindemutter 10 verschraubbar und gegenüber dem Gehäuse 9 axial unverschiebbar angeordnet, deren Innengewinde in ein Gewinde auf dem Außenmantel des Mantelrohres 6 eingreift, wobei ein Gewinde relativ hoher Steigung bevorzugt wird. Dieses Gewinde hoher Steigung ist in der Figur 1 mit Gewindegängen 11 am Umfang des Mantelrohres 6 dargestellt. In einen äußeren Zahnkranz 12 dieser Gewindemutter 10 greift das Ritzel 13 eines Antriebsmotors 14 ein, der in seiner Drehrichtung umkehrbar ist. Die Gewindemutter 10 besitzt einen seitlichen zylindrischen Ansatz 15, der die Lagerung auf dem oberen Ende des Gehäuses 9 aufnimmt. Die innere Laufbahn der Kugeln 16 eines für die Lagerung dienenden Kugellagers ist in die Mantelfläche des Gehäuses 9 eingedreht, während der äußere Laufring 17 des Kugellagers von außen nach innen vorgespannt ist, um eine spielfreie Lagerung zu erreichen. Diese Vorspannung geht von Segmenten 18 mit einer gegenüber einer Radialebene angeordneten Schrägfläche aus, wobei diese Schrägfläche mit einer Gegenfläche am Lagerring 17 zusammenwirkt. Mehrere Segmente 18 sind in dem zylindrischen Ansatz 15 auf dem Umfang verteilt angeordnet und durch einen Federring 19 in Richtung auf die Mittellängsachse 20 der Lenksäule verspannt, so daß die Segmente 18 Spannkräfte in radialer Richtung, aber auch in axialer Richtung, ausüben und eine spielfreie Lagerung der Gewindemutter 10 auf dem Gehäuse 9 bewirken. Zur Erzielung eines spielfreien Gewindeeingriffes ist an einer Umfangsstelle der Gewindemutter ein radialer Einschnitt 21 mit einer achsparallelen Stellschraube 22 vorgesehen, so daß die Gewindegänge des inneren Gewindes der Gewindemutter 10 in axialer Richtung auseinandergedrückt werden können, um einen absolut spielfreien Gewindeeingriff einstellen zu können. Zum Spielausgleich zwischen dem Mantelrohr 6 und dem Gehäuse 9 ist zwischen beiden eine Wellfeder 23 an sich bekannter Bauart eingesetzt. Außerdem sind am unteren Ende des Gehäuses auf dem Umfang verteilt mehrere Gleitsteine 24 eingesetzt, die in Schlitze des Mantelrohres 6 eingreifen und darin durch spielausgleichende Federn klapperfrei gehalten werden, so daß sie das Mantelrohr 6 und das Gehäuse 9 drehfest miteinander verbinden. Ein Federring 25 umschließt die Gleitsteine 24 und sichert diese gegen Herausfallen.

Für die Einstellung der Neigung des auf dem oberen Teil 1 der Lenkspindel befestigten Lenkrades ist das obere Gehäuseteil 5 mit der glockenförmigen Erweiterung 7 des Mantelrohres 6 durch eine ebenfalls motorisch verstellbare Anordnung verbunden. Diese Anordnung besteht nach einer bevorzugten Lösung aus einer Gewindeschraube 26, die in einer Gewindemutter 27 verschraubbar ist, welche in der glockenförmigen Erweiterung 7 drehbar, jedoch axial unverschiebbar, gelagert ist. Das eine Ende der Gewindeschraube 26 ist über Gelenklaschen 28 gelenkig mit dem oberen Gehäuseteil 5 verbunden, wobei wenigstens zwei Gelenklagerstellen vorgesehen sind. Die Gelenklaschen 28 sind innerhalb einer Schraubenfeder 29 angeordnet, die sich einerseits gegen einen Bund an der Gewindeschraube 26 und andererseits gegen einen Ansatz des oberen Gehäuseteils 5 abstützt und daher die Gelenkverbindungen der Gelenklasche 28 in Streckrichtung unter Vorspannung setzt. Das untere Ende der Gewindemutter 27 ist hülsenförmig ausgebildet und axial verschiebbar auf einem Mitnehmerzapfen 30 angeordnet, der über ein Vorgelegegetriebe 31 mit einem zweiten Antriebsmotor 32 verbunden ist. Die letztere Ausbildung ermöglicht, daß die Gewindemutter 27 den axialen Verstellbewegungen des Mantelrohres 6 mit seiner glockenförmigen Erweiterung 7 und dem darauf sitzenden Kopfteil der Lenksäule folgen kann, obgleich der Antriebsmotor 32 mit dem Getriebe 31 karosserieseitig fest, z.B. am Gehäuse 9, angeordnet ist, Je nach Drehrichtung des Antriebsmotors 32 wird die Gewindeschraube 26 aus der Gewindemutter 27 herausgeschraubt oder in diese hineingeschraubt, so daß dadurch eine Verstellung des oberen Gehäuseteiles 5 um die Kippachse 8 und somit eine Einstellung der Neigung des auf dem oberen Teil 1 der Lenkspindel befestigten Lenkrades erfolgt.

## Patentansprüche

1. Höhenverstellbare Lenksäule für Kraftfahrzeuge, bei der eine innere Lenkspindel aus axial teleskopisch ineinander verschiebbaren Teilen mit ihrem oberen, das Lenkrad abstützenden Teil drehbar in einem Mantelrohr (6) gelagert ist, welches seinerseits in einem an der Karosserie befestigten Gehäuse mittels eines Antriebsmotors axial verschiebbar angeordnet ist, wobei eine von dem Motor antreibbare Gewindemutter (10) mit einem Innengewinde auf einem Außengewinde des Mantelrohres (6) verschraubbar ist, dadurch gekennzeichnet, daß die Gewindemutter (10) mit ihrem das Gewinde aufweisenden Teil in Achsrichtung neben dem Gehäuse (9) angeordnet ist und einen das zugewendete Ende des Gehäuses (9) übergreifenden, ein Kugellager für die Gewindemutter (10) aufnehmenden Zylinderansatz (15) aufweist, wobei die innere Laufbahn der Kugeln (16) des Kugellagers in die Mantelfläche des Gehäuses (9) eingedreht und der eingesetzte äußere Laufring (17) des Kugellagers von außen nach innen vorgespannt ist.

2. Höhenverstellbare Lenksäule nach Anspruch 1, dadurch gekennzeichnet, daß in Schlitzen des Zylinderansatzes (15), die auf dessen Umfang verteilt angeordnet sind, radial von außen nach innen mit einer Feder belastete Segmente (18) beweglich sind, die gegenüber einer Radialebene schräg angestellte Keilflächen aufweisen, welche mit Gegenflächen am äußeren Laufring (17) des Kugellagers zusammenwirken und dadurch den Laufring radial und axial verspannen.

3. Höhenverstellbare Lenksäule nach Anspruch 2, dadurch gekennzeichnet, daß die Gewindemutter (10) in einer Querebene zu ihrer Achse zwischen den Gewindegängen einen radialen Einschnitt (21) aufweist, dessen Begrenzungsflächen mittels einer Stellschraube (22) gegeneinander verspannbar sind.

4. Höhenverstellbare Lenksäule nach den Ansprüchen 1 bis 3, dadurch gekennzeichnet, daß das Gewinde (11) auf dem Mantelrohr (6) und das korrespondierende Innengewinde der Gewindemutter (10) eine große Steigung aufweisen.

5. Höhenverstellbare Lenksäule nach den Ansprüchen 1 bis 4, dadurch gekennzeichnet, daß die Gewindemutter (10) einen äußeren Zahnkranz aufweist, in den die Verzahnung eines vom Antriebsmotor (14) antreibbaren Ritzels (13) eingreift.

## Claims

1. Height-adjustable steering column for motor vehicles, wherein an inner steering spindle consisting of parts which may be pushed telescopically one inside another, is so mounted that its upper part, which supports the steering wheel, is rotatable in a casing tube (6), which in turn is so mounted in a housing (9) fixed to the vehicle body as to be axially displaceable by means of a drive motor, a threaded nut (10) drivable by the motor being mountable via an inner thread on an outer thread on the casing tube (6), characterised in that the threaded nut (10) is mounted with its part having the thread next to the housing (9) in the axial direction and has a cylindrical projection (15) which engages over the associated end of the housing (9) and which receives a ball bearing for the threaded nut (10), the inner track of the balls (16) of the ball bearing being turned in the casing surface of the housing (9) and the inserted outer bearing race (17) of the ball bearing being prestressed from the outside inwards.

2. Height-adjustable steering column according to claim 1, characterised in that in slots distributed around the circumference of the cylindrical projection (15), spring-loaded segments (18) are movable radially inwards, and have wedge faces arranged obliquely relative to a radial plane, which wedge faces cooperate with counter-faces on the outer bearing race (17) of the ball bearing and thus stress the bearing race axially and radially.

3. Height-adjustable steering column according to claim 2, characterised in that the threaded nut (10) has, in a plane transverse to its axis, between the thread turns, a radial notch (21), whose defining faces may be braced against one another by means of an adjusting screw (22).

4. Height-adjustable steering column according to claims 1 to 3, characterised in that the thread (11) on the casing tube (6) and the corresponding inner thread of the threaded nut (10) have a large incline.

5. Height-adjustable steering column according to claims 1 to 4 characterised in that the threaded nut (10) has an outer gearwheel, with which the toothing of a pinion (13) drivable by the drive motor (14) meshes.

**Revendications**

1. Colonne de direction réglable en longueur pour véhicules automobiles, dans laquelle un arbre de direction intérieur constitué d'éléments coulissants axialement l'un dans l'autre de façon téléscopique, est monté de manière que sa partie supérieure soutienne le volant de direction, et tournant dans un tube de protection (6) qui à son tour est placé coulissant axialement, à l'aide d'un moteur d'entraînement, dans un carter (9) fixé sur la carrosserie, un écrou taraudé (10) entraîné par le moteur pouvant être vissé sur un filetage du tube de protection (6), caractérisée en ce que l'écrou taraudé (10) est placé à proximité du carter (9), avec sa partie présentant le taraudage dirigée axialement, et présente une partie de cylindre (15) passant sur l'extrémité, tournée vers elle, du carter (9), logeant un roulement à billes pour l'écrou taraudé (10), le chemin de roulement intérieur des billes (16) du roulement à billes étant tourné dans l'enveloppe du carter (9) et la bague de roulement (17), extérieure, rapportée, du roulement à billes, étant précontrainte de l'extérieur vers l'intérieur.

2. Colonne de direction réglable en longueur selon la revendication 1, caractérisée en ce que des segments (18) répartis sur le pourtour de la partie de cylindre (15), soumis radialement à l'action d'un ressort, de l'extérieur vers l'intérieur, sont mobiles dans des fentes de la partie de cylindre (15), lesquels segments présentent des surfaces en coin, obliques par rapport à un plan radial, qui coopèrent avec des contre-surfaces de la bague de roulement (17) extérieure du roulement à billes, et serrent ainsi la bague de roulement, radialement et axialement.

3. Colonne de direction réglable en longueur selon la revendication 2, caractérisée en ce que l'écrou taraudé (10) présente, dans un plan transversal à son axe, entre les filets, une entaille (21) radiale dont les surfaces de délimitation peuvent être serrées l'une contre l'autre, à l'aide d'une vis de réglage (22).

4. Colonne de direction réglable en longueur selon les revendications 1 à 3, caractérisée en ce que le filetage (11) du tube de protection (6) et le taraudage correspondant de l'écrou taraudé (10) présentent un même pas.

5. Colonne de direction réglable en longueur selon les revendications 1 à 4, caractérisée en ce que l'écrou taraudé (10) présente une couronne dentée extérieure dans laquelle s'engage la denture d'un pignon (13) entraîné par le moteur d'entraînement (14).

*Fig. 1*

*Fig. 2*